# EUROPÄISCHE PATENTANMELDUNG

(11) **EP 4 250 409 A1**
(43) Veröffentlichungstag der Anmeldung: **27.09.2023**
(21) Anmeldenummer: 22163818.2
(22) Anmeldetag: 23.03.2022
(51) Int. Cl.: H01M 8/04014, H01M 8/04007, H01M 8/04089, H01M 8/2475

(54) **ANORDNUNG ZUM KÜHLEN UND/ ODER BELÜFTEN VON BRENNSTOFFZELLEN**

(71) Anmelder: tmax Holding GmbH, 68169 Mannheim (DE)
(72) Erfinder: Cappellucci, Peter, 68169 Mannheim (DE); Baum, Armin, 64668 Rimbach (DE)
(74) Vertreter: Wesch, Arno

(57) **Zusammenfassung**

Eine Anordnung zum Kühlen und/ oder Belüften von Brennstoffzellen, umfassend einen aus mehreren Brennstoffzellen gebildeten Stapel (1), welcher innerhalb eines Arbeitsraums (2) angeordnet ist, wobei der Arbeitsraum (2) durch eine Isoliereinrichtung (3) zumindest abschnittsweise begrenzt ist und wobei die Isoliereinrichtung (3) Durchgangsöffnungen (4, 4a) zur Führung von Gas in den Arbeitsraum (2) aufweist, ist im Hinblick auf die Aufgabe, eine Anordnung zum Kühlen und/ oder Belüften von Brennstoffzellen anzugeben, welche bei zuverlässiger thermischer Isolation eine möglichst zuverlässige Zufuhr von Gas, insbesondere Luft, zu einem Stapel von Brennstoffzellen ermöglicht, dadurch gekennzeichnet, dass die Isoliereinrichtung (3) zumindest teilweise in einem Isolierkörper (5) angeordnet ist und einen dem Isolierkörper (5) zugewandten äußeren Mantel (6) und einen dem Arbeitsraum (2) zugewandten inneren Mantel (7) aufweist, wobei die beiden Mäntel (6, 7) zwischen sich eine sich in Axialrichtung erstreckende Kanalkammer (8) zur Führung von Gas und/ oder zur Isolierung durch Gas ausbilden und wobei der innere Mantel (7) eine Vielzahl der Durchgangsöffnungen (4, 4a) aufweist.

## Beschreibung

Die Erfindung betrifft eine Anordnung nach dem Oberbegriff des Anspruchs 1.

Aus der EP 3 035 431 B1 ist ein Brennstoffzellenmodul bekannt, welches einen Zellenstapel mit Brennstoffzellen aufweist. Das Brennstoffzellenmodul weist ein Luftzuführsystem zur Zuführung von Luft in einen Luftverteilraum zum Betreiben oder Kühlen der Brennstoffzellen auf. Die axial gestapelten Brennstoffzellen erfahren eine unterschiedlich starke Kühlung in Axialrichtung. Der Zellenstapel ist von einem Isolierkörper umgeben, der aus einem keramischen Material gefertigt ist. Der Isolierkörper weist von außen nach innen führende Durchgangsöffnungen auf, welche gruppenweise angeordnet sind. Konkret sind in einem Bereich vier Durchgangsöffnungen in fünf Ebenen übereinander angeordnet.

Das Einbringen von relativ vielen Durchgangsöffnungen in einen Isolierkörper auf verschiedenen Ebenen, insbesondere in ein keramisches Material, ist aufwendig und kann zur Schädigung des Isolierkörpers führen. Als Folge einer solchen Schädigung kann die Isolationswirkung des Isolierkörpers nicht mehr zuverlässig sicher gestellt werden. Da Brennstoffzellen sehr heiß werden können, kann die Umgebung des Brennstoffzellenmoduls gefährdet werden.

Der Erfindung liegt vor diesem Hintergrund die Aufgabe zugrunde, eine Anordnung zum Kühlen und/ oder Belüften von Brennstoffzellen anzugeben, welche bei zuverlässiger thermischer Isolation eine möglichst zuverlässige Zufuhr von Gas, insbesondere Luft, zu einem Stapel von Brennstoffzellen ermöglicht.

Die vorliegende Erfindung löst die genannte Aufgabe durch die Merkmale des Anspruchs 1.

Erfindungsgemäß ist zunächst erkannt worden, dass eine Isoliereinrichtung einen definierten Kanal für ein Gas ausbilden kann. Durch diesen Kanal können die Brennstoffzellen über die gesamte Axialrichtung definiert mit Gas, insbesondere Luft, versorgt werden. Da sich ein solcher Kanal in Form einer Kanalkammer axial erstreckt, können gleichmäßig oder ungleichmäßig oder in bevorzugten Mustern Durchgangsöffnungen für ein Gas in der Isoliereinrichtung angeordnet werden. Durch diese Durchgangsöffnungen kann Gas in den Arbeitsraum strömen, in dem die Brennstoffzellen angeordnet sind. Erfindungsgemäß ist auch erkannt worden, dass Wärme aus dem Arbeitsraum in die Kanalkammer abströmen kann. Die Isoliereinrichtung selbst ist bevorzugt aus einem Metall gefertigt und daher im Gegensatz zu einem Isolierkörper aus Keramik verwindungs- und torsionsstabil. Erfindungsgemäß ist konkret erkannt worden, dass in eine solche Isoliereinrichtung relativ problemlos Durchgangsöffnungen in beliebiger Zahl und Dimension eingebracht werden können, wobei der Isolierkörper selbst nur sehr wenig Durchbrüche für eine Gasleitung aufweisen muss. Erfindungsgemäß bewirkt die Kanalkammer neben der Gasführung auch eine erste thermische Isolation durch ein Gaspolster oder eine Gasströmung. Der Isolierkörper, der die Isoliereinrichtung umgibt, bewirkt eine sehr zuverlässige und starke zweite thermische Isolation gegenüber der Umwelt. Der Isolierkörper ist bevorzugt nicht metallisch ausgebildet und kann nur mit einer sehr geringen Anzahl an Durchbrüchen, bevorzugt nur zwei, versehen sein, die eine Gasleitung zur Kanalkammer herstellen.

Der innere Mantel könnte aus einer perforierten Folie oder einem perforierten Blech gefertigt sein, wobei die Perforationen die Durchgangsöffnungen ausbilden. Ein perforiertes Blech weist eine Vielzahl, nämlich mehr als 15, Durchgangsöffnungen auf, welche die Folie oder das Blech siebartig gestalten. Bevorzugt ist der innere Mantel vollständig und gleichmäßig mit Perforationen übersät. Eine Folie oder ein Blech ist bevorzugt aus Edelstahl gefertigt und daher weitgehend korrosionsfrei.

Pro Quadratzentimeter Mantelfläche des inneren Mantels könnten 15 bis 20 Perforationen vorgesehen sein. Hierdurch ist nahezu die gesamte und bevorzugt die gesamte umlaufende Mantelfläche mit Durchgangsöffnungen versehen. Alternativ oder zusätzlich könnte eine Perforation einen Lochdurchmesser im Bereich 0,3 bis 0,5 mm oder 0,3 bis 10 mm aufweisen. Durch eine solche Durchgangsöffnung kann ein Gas ohne nennenswerten Strömungswiderstand hindurchströmen und sich im Arbeitsraum verteilen. Durchgangsöffnungen im Bereich 0,3 bis 10 mm könnten durch einen Laser in den inneren Mantel, bevorzugt nur an einigen Stellen, eingebracht sein.

Drei bis fünf Prozent der Fläche des inneren Mantels könnten durch die Perforationen offen für eine Durchströmung mit Gas sein. Hierdurch ist der innere Mantel mechanisch sehr stabil, obwohl er gleichmäßig oder nahezu gleichmäßig mit Durchgangsöffnungen übersät ist.

Der äußere Mantel könnte aus einer nicht perforierten Folie oder einem nicht perforierten Blech, insbesondere einem Glattblech, gefertigt sein. Hierdurch ist sichergestellt, dass das Gas nach radial innen strömt und nicht nach radial außen durch den äußeren Mantel entweichen kann.

Eine für den äußeren Mantel oder den inneren Mantel verwendete Folie oder ein Blech könnte 0,1 bis 0,3 mm dick sein. Hierdurch kann sowohl ein stabiler äußerer Mantel als auch ein stabiler innerer Mantel geschaffen werden.

Alternativ oder zusätzlich könnte die Verbindung von mehreren Folien und/ oder Blechen miteinander durch Widerstandspunktschweißen realisiert sein. Durch ein solches Schweißverfahren wird möglichst wenig Oberfläche einer Folie oder eines Blechs mit Schweißnähten bedeckt. Die Isoliereinrichtung, die aus so geschweißten Folien oder Blechen aufgebaut ist, ist sehr flexibel deformierbar und dennoch torsionsstabil.

Es könnte eine Zuleitung und/ oder eine Ableitung für ein Gas ausgebildet sein, welche mit der Kanalkammer mittelbar oder unmittelbar fluidleitend verbunden und durch den Isolierkörper geführt ist. Hierdurch kann das Gas durch den Isolierkörper an nur einer Stelle einströmen und/ oder an nur einer Stelle abströmen. Der Isolierkörper selbst ist nicht mit vielen Durchgangsöffnungen versehen, die unmittelbar in den Arbeitsraum führen, in welchem die Brennstoffzellen angeordnet ist. Das Material des Isolierkörpers wird geschont.

Die Zuleitung könnte in eine Luftverteilungskammer geführt sein, welche mit der sich axial erstreckenden Kanalkammer und/ oder dem Arbeitsraum fluidleitend verbunden ist und eine Haube und einen Boden aufweist. Durch eine solche Luftverteilungskammer kann einströmendes Gas lateral verteilt werden, bevor es sich vertikal in Axialrichtung des Stapels aus Brennstoffzellen ausbreitet.

Der Boden der Luftverteilungskammer könnte durch eine perforierte Folie oder ein perforiertes Blech der oben beschriebenen Art gebildet sein, wobei der Boden mit der sich axial erstreckenden Kanalkammer und/ oder dem Arbeitsraum eine Fluidverbindung herstellt. Hierdurch kann das einströmende Gas sowohl lateral zu der Kanalkammer als auch vertikal direkt in den Arbeitsraum geführt werden.

Die Zuleitung könnte von oben oder in einem oberen Bereich seitlich durch den Isolierkörper geführt sein. Alternativ oder zusätzlich könnte die Ableitung von unten oder in einem unteren Bereich seitlich durch den Isolierkörper geführt sein. Eine seitliche Zuführung von Gas begünstigt dessen laterale Verteilung, eine Zuführung von oben oder Abführung nach unten begünstigt eine vertikale Strömung von Gas.

Der Zuleitung könnte in Fluidströmungsrichtung eine Pumpeinrichtung vorgeschaltet sein. Hierdurch kann Gas unter atmosphärischem Überdruck in den Arbeitsraum gepresst werden. Alternativ oder zusätzlich könnte der Ableitung in Fluidströmungsrichtung eine Saugeinrichtung nachgeschaltet sein. Hierdurch ist die Verweildauer des Gases im Arbeitsraum beeinflussbar. Außerdem kann die Saugeinrichtung innerhalb des Arbeitsraums einen atmosphärischen Unterdruck erzeugen, so dass über die Zuleitung Gas angesaugt wird.

Der Isolierkörper könnte aus mikroporösem Dämmstoff oder faserhaltigem Dämmstoff gefertigt sein. Ein solcher Isolierkörper zeigt ein besonders gutes thermisches Isolationsverhalten.

Der Isolierkörper könnte von einer Isolationshülle umgeben sein, die über den Isolierkörper gestülpt ist. Hierdurch wird ein spröder oder leicht brechender Isolierkörper gut gegen Einwirkungen von außen geschützt. Ein mehrteiliger Isolierkörper wird durch die Isolationshülle zusammen gehalten. Bevorzugt ist die Isolationshülle aus einem Metall, bevorzugt Edelstahl, gefertigt. Selbstverständlich sind in die Isolationshülle Durchgänge eingebracht, so dass die Zuleitung und/ oder die Ableitung durch den Isolierkörper führbar sind.

Die Isolationshülle könnte einen Hüllenboden aufweisen. Hierdurch kann das Innere der Isolationshülle gut nach außen abgedichtet werden.

Die Isoliereinrichtung könnte mittels einer Dichtung bodenseitig gegen den Isolierkörper und/ oder einen Hüllenboden abgedichtet sein. Durch die Dichtung kann sichergestellt werden, dass Gas nicht in unerwünschter Richtung entweichen kann.

Bevorzugt wird als einströmendes und abströmendes Gas Luft verwendet.

In der Zeichnung zeigen
- Fig. 1: eine Schnittzeichnung einer Anordnung, bei der eine Zuleitung für Gas von oben durch einen Isolierkörper in eine Luftverteilungskammer geführt ist, wobei bei der Anordnung eine Abführung des Gases nach unten erfolgt,
- Fig. 2: eine teilweise Schnittzeichnung einer weiteren Anordnung, bei der eine Zuleitung für Gas von oben durch einen Isolierkörper in eine Luftverteilungskammer geführt ist, deren Boden durch eine perforierte Folie oder ein perforiertes Blech gebildet ist,
- Fig. 3: eine Schnittzeichnung einer weiteren Anordnung, bei der eine Zuleitung für Gas von oben seitlich durch einen Isolierkörper in eine Luftverteilungskammer geführt ist und bei der eine Abführung von Gas unten zur Seite hin erfolgt, und
- Fig. 4: von links nach rechts eine im Wesentlichen zylindrischglockenförmige Isolationshülle mit einer Kuppe am oberen Ende, über der eine Zuleitung dargestellt ist, einen im Wesentlichen zylindrischglockenförmigen Isolierkörper mit einer Kuppe, wobei unter dem Isolierkörper eine Dichtung in Form eines Dichtrings dargestellt ist, einen zylindrischen äußeren Mantel, über dem ein Boden und eine Haube einer Luftverteilungskammer dargestellt sind, und einen zylindrischen inneren Mantel, wobei der innere Mantel und der äußere Mantel zwischen sich die Kanalkammer ausbilden.

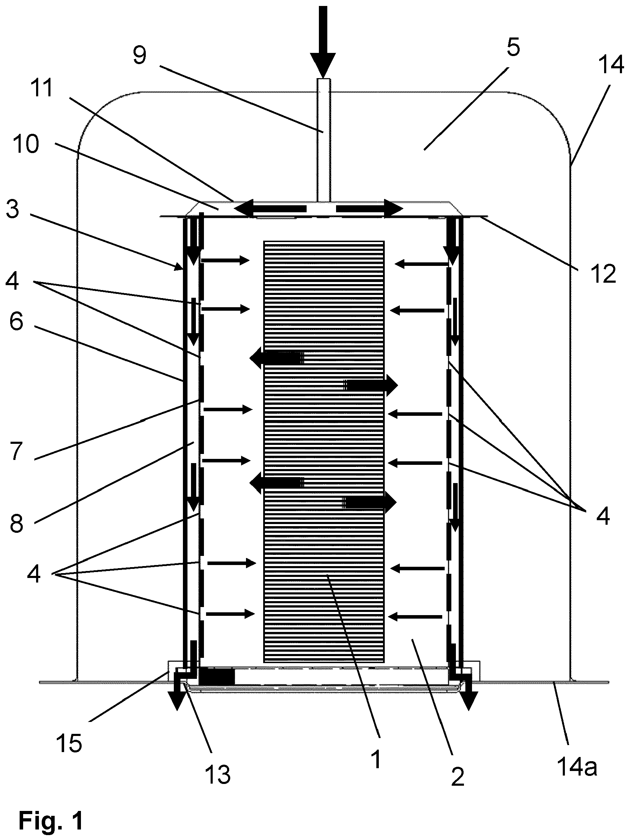

Fig. 1 zeigt eine Anordnung zum Kühlen und/ oder Belüften von Brennstoffzellen, umfassend einen aus mehreren Brennstoffzellen gebildeten Stapel 1, welcher innerhalb eines Arbeitsraums 2 angeordnet ist. Der Arbeitsraum 2 ist durch eine Isoliereinrichtung 3 zumindest abschnittsweise begrenzt, nämlich zumindest in lateraler Richtung begrenzt.

Die Isoliereinrichtung 3 weist sehr viele Durchgangsöffnungen 4 zur Führung von Gas in den Arbeitsraum 2 auf. Die Isoliereinrichtung 3 ist zumindest teilweise in einem Isolierkörper 5 angeordnet und weist einen dem Isolierkörper 3 zugewandten äußeren Mantel 6 und einen dem Arbeitsraum 2 zugewandten inneren Mantel 7 auf. Die beiden Mäntel 6, 7 bilden zwischen sich eine sich in Axialrichtung erstreckende Kanalkammer 8 zur Führung von Gas und/ oder zur Isolierung durch Gas. Die Kanalkammer 8 ist eine Art Ringspalt, weil die Mäntel 6, 7 konzentrisch angeordnet sind.

Der innere Mantel 7 weist eine Vielzahl der genannten Durchgangsöffnungen 4 auf. Die Durchgangsöffnungen 4 sind längs des Umfangs und längs der Höhe des zylindrischen inneren Mantels 7 im Wesentlichen gleichmäßig verteilt angeordnet. Der innere Mantel 7 ist aus einer perforierten Folie gefertigt, wobei die Perforationen die Durchgangsöffnungen 4 ausbilden.

Der innere Mantel 7 ist aus einer perforierten Edelstahlfolie gefertigt. Die Edelstahlfolie ist mikroperforiert. Die Edelstahlfolie weist pro Quadratzentimeter Mantelfläche des inneren Mantels 7 15 bis 20 Perforationen auf.

Eine Perforation weist einen Lochdurchmesser im Bereich 0,3 bis 0,5 mm auf. Drei bis fünf Prozent der Fläche des inneren Mantels 7 sind durch die Perforationen offen für eine Durchströmung mit Gas, die restliche Fläche ist geschlossen. Die Durchströmung ist durch waagerechte schmale Pfeile in Fig. 1 dargestellt.

Der äußere Mantel 6 ist aus einer nicht perforierten Edelstahlfolie, nämlich einem Glattblech, gefertigt. Die genannten Folien sind 0,1 bis 0,3 mm dick.

Es ist in einem oberen Bereich der Anordnung eine Zuleitung 9 für ein Gas ausgebildet, welche mit der Kanalkammer 8 mittelbar oder unmittelbar fluidleitend verbunden und von oben durch den Isolierkörper 5 geführt ist. Die Zuleitung 9 ist vertikal orientiert.

Die Zuleitung 9 ist in eine Luftverteilungskammer 10 geführt, welche mit der sich axial erstreckenden Kanalkammer 8 fluidleitend verbunden ist und eine Haube 11 und einen Boden 12 aufweist. Insoweit wird der Arbeitsraum 2 nach oben durch die Luftverteilungskammer 10 bzw. deren Boden 12 begrenzt.

Eine Ableitung 13 in einem unteren Bereich der Anordnung führt nach vertikal unten durch den Isolierkörper 5 nach außen. Das Gas strömt durch die Ableitung 13 aus dem Isolierkörper 5 heraus nach außen. Diese Strömung ist durch die geknickten Pfeile in Fig. 1 dargestellt.

Der Zuleitung 9 ist in Fluidströmungsrichtung eine Pumpeinrichtung vorgeschaltet, nämlich ein Druckluftventilator oder eine Druckluftversorgung. Der Ableitung 13 ist in Fluidströmungsrichtung eine Saugeinrichtung nachgeschaltet. Diese ist als Luftansaugventilator ausgebildet. Es ist aber auch denkbar, dass lediglich Druckluft in die Zuleitung 9 eingeleitet wird, ohne dass an der Ableitung 13 eine Saugeinrichtung vorhanden ist.

Der Isolierkörper 5 ist aus mikroporösem Dämmstoff oder faserhaltigem Dämmstoff gefertigt. Der Isolierkörper 5 ist glockenförmig aufgebaut. Der Isolierkörper 5 ist von einer ebenfalls glockenförmigen Isolationshülle 14 umgeben, die über den Isolierkörper 5 gestülpt ist. Die Isoliereinrichtung 3 ist mittels einer Dichtung 15, nämlich einem Dichtring, bodenseitig gegen den Isolierkörper 5 abgedichtet, so dass das Gas nach vertikal unten entweichen kann.

Das Gas wird von oben in die Zuleitung 9 eingeströmt. Die Zuleitung 9 kann als Luftlanze oder Belüftungsrohr ausgestaltet sein. Das kalte Gas erfährt nach der Einströmung von oben eine laterale Verteilung in der Luftverteilungskammer 10. Dies ist durch die waagerechten entgegengesetzten Pfeile dargestellt. Danach wird das Gas in die Kanalkammer 8 geführt, welche das Gas in Vertikalrichtung nach unten und durch die Perforationen bzw. Durchgangsöffnungen 4 zugleich nach radial innen in den Arbeitsraum 2 führt.

Die Gasführung bzw. Gasverteilung in der Kanalkammer 8 fungiert als Gasspaltisolierung. Es erfolgt ein sukzessives Erwärmen des zugeführten Gases innerhalb der Kanalkammer 8. Dies hängt damit zusammen, dass die Abwärme der Brennstoffzellen in Richtung der Isoliereinrichtung 3 abstrahlt. Dies ist durch die dicken waagerechten Pfeile dargestellt.

Die Isolierleitung der Luftspaltisolierung ist abhängig vom Luftdurchsatz, nämlich dem Luftvolumen und der Saug- bzw. der Druckleistung der Vorrichtungen, die der Zuleitung vorgeschaltet bzw. der Ableitung nachgeschaltet sind. Der Isolierkörper 5 ist mehrteilig und aus mikroporösem Dämmstoff oder Faser-Dämmstoffen, abhängig von der geforderten Isolierleistung oder der Isolierleistung der Kanalkammer 8, aufgebaut.

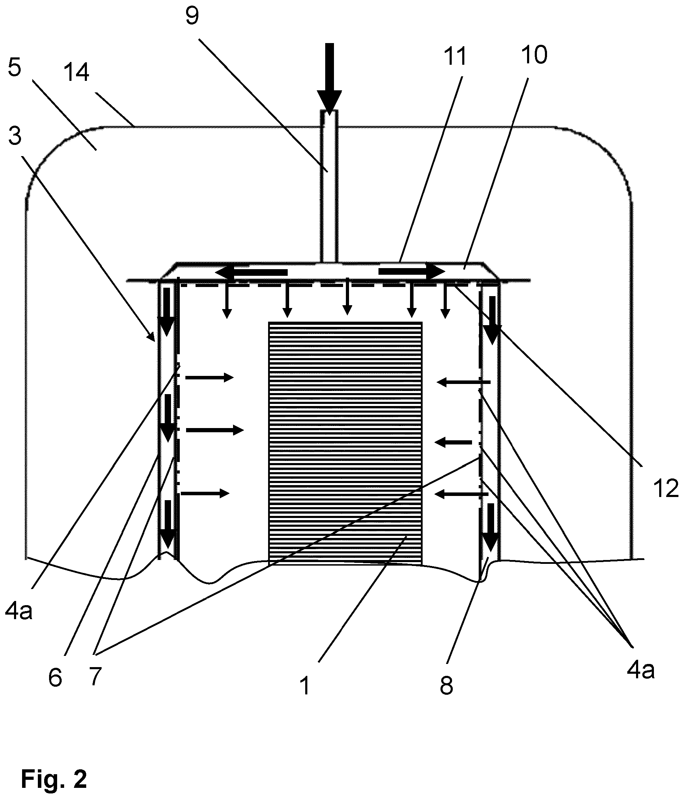

Fig. 2 zeigt eine weitere Ausführungsform einer Anordnung, bei welcher der Boden 12 der Luftverteilungskammer 10 durch eine perforierte Folie der oben beschriebenen Art gebildet ist, der mit der sich axial erstreckenden Kanalkammer 8 und dem Arbeitsraum 2 eine Fluidverbindung herstellt.

Eine Perforation des inneren Mantels 7 weist einen Lochdurchmesser im Bereich 0,3 bis 10 mm auf. Diese Perforationen sind gelasert, das heißt durch einen Laser in den inneren Mantel 7 eingebracht. Es erfolgt so eine partielle Belüftung durch gelaserte Luftkanäle, wenn als Gas Luft eingesetzt wird. Durch einen Laserschnitt kann ein definiertes Lochbild im äußeren Mantel 7 erzeugt werden. Die Durchgangsöffnungen 4a sind an definierten Positionen angeordnet.

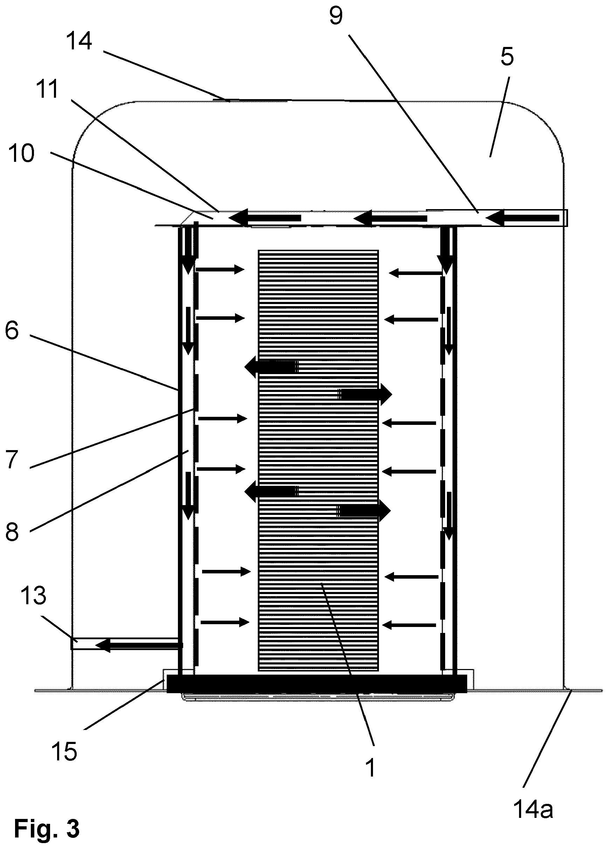

Fig. 3 zeigt eine weitere Anordnung, bei welcher die Zuleitung 9 in einem oberen Bereich der Anordnung seitlich durch den Isolierkörper 5 und die Isolationshülle 14 geführt ist. Das Gas strömt in die Luftverteilungskammer 10 und von dort in die Kanalkammer 8. Die Ableitung 13 ist in einem unteren Bereich der Anordnung seitlich durch den Isolierkörper 5 und die Isolationshülle 14 geführt. Die Isolationshülle 14 weist einen Hüllenboden 14 auf. Die Isoliereinrichtung 3 ist mittels einer Dichtung 15 bodenseitig gegen den Hüllenboden 14a und seitlich gegen den Isolierkörper 5 abgedichtet. Der Hüllenboden 14a kann daher den Arbeitsraum 2 nach unten begrenzen.

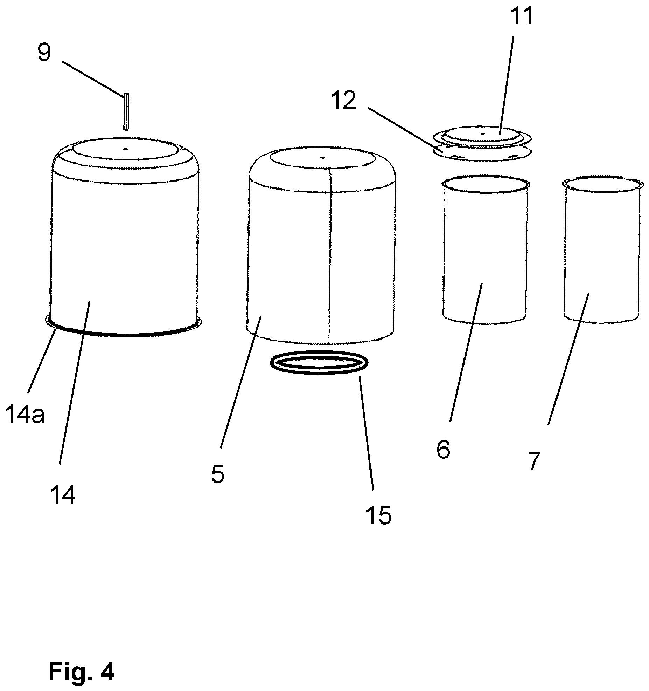

Fig. 4 zeigt Einzelteile die zur Fertigung von Anordnungen der hier beschriebenen Art verwendet werden. Die glockenförmige Isolationshülle 14 ist aus einem Blech, insbesondere einem Edelstahl, gefertigt und weist einen Durchgang für eine Zuleitung 9 auf. Der äußere Mantel 6 und der innere Mantel sind jeweils als Edelstahlfolie ausgebildet. Der äußere Mantel 6 ist unperforiert und glatt, der innere Mantel 7 ist perforiert. Die Haube 11 und der Boden 12 sind ebenfalls aus Blechen, insbesondere aus Edelstahl, gefertigt.

Die Verbindung der einzelnen Folien und Bleche in den gezeigten Anordnungen erfolgt durch ein Widerstandspunktschweißverfahren.

Als strömendes Gas wird in den Fig. 1 bis 3 Luft verwendet.

### Bezugszeichenliste

- 1: Stapel
- 2: Arbeitsraum
- 3: Isoliereinrichtung
- 4, 4a: Durchgangsöffnung in 7 oder 12
- 5: Isolierkörper
- 6: äußerer Mantel von 3
- 7: innerer Mantel von 3
- 8: Kanalkammer oder Ringspalt von 3
- 9: Zuleitung
- 10: Luftverteilungskammer
- 11: Haube von 10
- 12: Boden von 10
- 13: Ableitung
- 14: Isolationshülle
- 14a: Hüllenboden von 14
- 15: Dichtung

## Patentansprüche

1. Anordnung zum Kühlen und/ oder Belüften von Brennstoffzellen, umfassend einen aus mehreren Brennstoffzellen gebildeten Stapel (1), welcher innerhalb eines Arbeitsraums (2) angeordnet ist, wobei der Arbeitsraum (2) durch eine Isoliereinrichtung (3) zumindest abschnittsweise begrenzt ist und wobei die Isoliereinrichtung (3) Durchgangsöffnungen (4, 4a) zur Führung von Gas in den Arbeitsraum (2) aufweist,
**dadurch gekennzeichnet, dass**
die Isoliereinrichtung (3) zumindest teilweise in einem Isolierkörper (5) angeordnet ist und einen dem Isolierkörper (5) zugewandten äußeren Mantel (6) und einen dem Arbeitsraum (2) zugewandten inneren Mantel (7) aufweist, wobei die beiden Mäntel (6, 7) zwischen sich eine sich in Axialrichtung erstreckende Kanalkammer (8) zur Führung von Gas und/ oder zur Isolierung durch Gas ausbilden und wobei der innere Mantel (7) eine Vielzahl der Durchgangsöffnungen (4, 4a) aufweist.

2. Anordnung nach Anspruch 1, **dadurch gekennzeichnet, dass** der innere Mantel (7) aus einer perforierten Folie oder einem perforierten Blech gefertigt ist, wobei die Perforationen die Durchgangsöffnungen (4, 4a) ausbilden.

3. Anordnung nach Anspruch 2, **dadurch gekennzeichnet, dass** pro Quadratzentimeter Mantelfläche des inneren Mantels (7) 15 bis 20 Perforationen vorgesehen sind und/ oder dass eine Perforation einen Lochdurchmesser im Bereich 0,3 bis 0,5 mm oder 0,3 bis 10 mm aufweist.

4. Anordnung nach Anspruch 3, **dadurch gekennzeichnet, dass** drei bis fünf Prozent der Fläche des inneren Mantels (7) durch die Perforationen offen für eine Durchströmung mit Gas sind.

5. Anordnung nach einem der voranstehenden Ansprüche, **dadurch gekennzeichnet, dass** der äußere Mantel (7) aus einer nicht perforierten Folie oder einem nicht perforierten Blech, insbesondere einem Glattblech, gefertigt ist.

6. Anordnung nach Anspruch 5, **dadurch gekennzeichnet, dass** die Folie oder das Blech 0,1 bis 0,3 mm dick sind und/ oder dass die Verbindung von mehreren Folien und/ oder Blechen miteinander durch Widerstandspunktschweißen realisiert ist.

7. Anordnung nach einem der voranstehenden Ansprüche, **dadurch gekennzeichnet, dass** eine Zuleitung (9) und/ oder eine Ableitung (13) für ein Gas ausgebildet ist, welche mit der Kanalkammer (8) mittelbar oder unmittelbar fluidleitend verbunden und durch den Isolierkörper (5) geführt ist.

8. Anordnung nach Anspruch 7, **dadurch gekennzeichnet, dass** die Zuleitung (9) in eine Luftverteilungskammer (10) geführt ist, welche mit der sich axial erstreckenden Kanalkammer (8) und/ oder dem Arbeitsraum (2) fluidleitend verbunden ist und eine Haube (11) und einen Boden (12) aufweist.

9. Anordnung nach Anspruch 8, **dadurch gekennzeichnet, dass** der Boden (12) der Luftverteilungskammer (10) durch eine perforierte Folie oder ein perforiertes Blech gebildet ist, der mit der sich axial erstreckenden Kanalkammer (8) und/ oder dem Arbeitsraum (2) eine Fluidverbindung herstellt.

10. Anordnung nach einem der Ansprüche 7 bis 9, **dadurch gekennzeichnet, dass** die Zuleitung (9) von oben oder seitlich durch den Isolierkörper (5) geführt ist und/ oder dass die Ableitung (13) von unten oder seitlich durch den Isolierkörper (5) geführt ist.

11. Anordnung nach einem der Ansprüche 7 bis 10, **dadurch gekennzeichnet, dass** der Zuleitung (9) in Fluidströmungsrichtung eine Pumpeinrichtung vorgeschaltet ist und/ oder dass der Ableitung (13) in Fluidströmungsrichtung eine Saugeinrichtung nachgeschaltet ist.

12. Anordnung nach einem der voranstehenden Ansprüche, **dadurch gekennzeichnet, dass** der Isolierkörper (5) aus mikroporösem Dämmstoff oder faserhaltigem Dämmstoff gefertigt ist.

13. Anordnung nach einem der voranstehenden Ansprüche, **dadurch gekennzeichnet, dass** der Isolierkörper (5) von einer Isolationshülle (14) umgeben ist, die über den Isolierkörper (5) gestülpt ist.

14. Anordnung nach Anspruch 13, **dadurch gekennzeichnet, dass** die Isolationshülle (14) einen Hüllenboden (14a) aufweist.

15. Anordnung nach einem der voranstehenden Ansprüche, **dadurch gekennzeichnet, dass** die Isoliereinrichtung (3) mittels einer Dichtung (15) bodenseitig gegen den Isolierkörper (5) und/ oder einen Hüllenboden (14a) abgedichtet ist.
